# FASCICULE DE BREVET EUROPEEN

(11) **EP 1 631 405 B1**
(45) Date de publication et mention de la délivrance du brevet: **14.02.2007**
(21) Numéro de dépôt: 04767286.0
(22) Date de dépôt: 08.06.2004
(51) Int. Cl.: B22D 11/06, B21B 1/46

(54) **PROCEDE ET INSTALLATION DE COULEE CONTINUE DIRECTE D'UNE BANDE METALLIQUE**
VERFAHREN UND ANLAGE ZUM DIREKT-STRANGGIESSEN EINES METALLBANDS
METHOD AND PLANT FOR CONTINUOUS DIRECT CASTING OF A METAL STRIP

(30) Priorité: 10.06.2003 FR 0306943
(43) Date de publication de la demande: 08.03.2006
(73) Titulaire: ARCELOR France, 93200 Saint Denis (FR); ThyssenKrupp Nirosta GmbH, 47807 Krefeld (DE); Voest Alpine Industrieanlagenbau GmbH, 4020 Linz (AT)
(72) Inventeur: DEZ, Anne, F-57050 Plappeville (FR); MASSON, Pascal, F-57000 Metz (FR); FARAL, Michel, F-57000 Metz (FR); REYTER, Jean-Michel, F-57710 Aumetz (FR); PORCU, Giorgio Centro Sviluppo Materiali S.p., I-00129 Rome (IT); DAMASSE, Jean-Michel, F-62400 Bethune (FR)
(74) Mandataire: Neyret, Daniel Jean Marie
(86) Numéro de dépôt international: PCT/FR2004/001420
(87) Numéro de publication internationale: WO 2004/110678

(56) Documents cités:
- WO-A-96/01708
- WO-A-96/01710
- US-A- 6 027 587
- US-A1- 2002 166 653
- PATENT ABSTRACTS OF JAPAN vol. 2000, no. 11, 3 janvier 2001 (2001-01-03) -& JP 2000 230182 A (NIPPON STEEL CORP), 22 août 2000 (2000-08-22)
- PATENT ABSTRACTS OF JAPAN vol. 2000, no. 15, 6 avril 2001 (2001-04-06) -& JP 2000 351014 A (KAWASAKI STEEL CORP), 19 décembre 2000 (2000-12-19)

## Description

L'invention concerne la coulée continue des métaux. Plus précisément, elle concerne la coulée continue de bandes métalliques de faible épaisseur directement à partir de métal liquide selon le procédé de coulée entre cylindres, ou, de manière générale, entre des parois refroidies en défilement.

Le procédé de coulée entre cylindres consiste à couler une bande métallique, par exemple d'acier au carbone, d'acier inoxydable, d'alliage Fe-Ni, Fe-Si ou d'autres alliages ferreux ou non ferreux, par solidification de métal liquide sur les parois latérales cylindriques de deux cylindres en rotation en sens inverses refroidis intérieurement. Deux « peaux » solidifiées se forment sur ces parois et on le fait se rejoindre sensiblement au niveau du « col », c'est à dire de l'endroit où l'intervalle entre les parois est le plus faible et sensiblement égal à l'épaisseur de la bande que l'on désire couler (de l'ordre de 1 à 10mm, généralement 3 à 5mm).

Dans ce nombreux cas, la bande solidifiée issue des cylindres de coulée subit ensuite un laminage à chaud en une ou plusieurs étapes, au moyen d'une ou de plusieurs cages de laminoir disposées en ligne avec les cylindres de coulée. C'est seulement après ce laminage à chaud (et d'éventuelles autres opérations métallurgiques, tels que des réchauffages et/ou des refroidissements contrôlés) que la bande est bobinée pour être ensuite expédiée au client ou à d'autres stations de traitement telles qu'une ligne de laminage à froid.

Le laminage à chaud effectué en ligne permet d'obtenir des bandes minces d'acier (et d'alliage ferreux en général) bobinées, ayant une épaisseur proche de l'épaisseur finale désirée pour le produit, sans qu'il soit nécessaire de réaliser cette faible épaisseur directement en sortie des cylindres (où les épaisseurs inférieures à 3mm environ sont difficiles à réaliser). Il permet aussi d'affiner et d'homogénéiser la microstructure de la bande.

On a intérêt à ce que le taux de réduction lors du laminage à chaud soit aussi élevé que possible. Toutefois, on est, dans la pratique, limité à cet égard notamment par la calamine qui se forme à la surface de la bande entre sa sortie des cylindres et son entrée dans le laminoir, à cause de l'oxydation de la surface par l'atmosphère ambiante.

Un remède à cette limitation est d'installer entre les cylindres et le laminoir une enceinte d'inertage dans laquelle on maintient une atmosphère neutre ou réductrice, pauvre en oxygène. La présence de cette enceinte complique cependant sensiblement la fabrication et l'exploitation de l'installation de coulée continue. Et même avec une telle enceinte d'inertage, il est difficile de dépasser un taux de réduction de 50% environ, à moins d'augmenter le coût de construction de l'installation dans des proportions qui annuleraient les avantages économiques de la filière « coulée de produits minces » par rapport aux filières de production classiques.

Le but de l'invention est de proposer un procédé et une installation de coulée continue de bandes minces donnant accès dans des conditions économiques avantageuses à des taux de réduction très élevés lors du laminage à chaud en ligne.

A cet effet, l'invention a pour objet un procédé de coulée continue directe d'une bande métallique selon lequel on coule ladite bande par solidification de métal liquide dans une lingotière à parois mobiles refroidies et on effectue un laminage à chaud en ligne de ladite bande, caractérisé en ce qu'on envoie sur la surface de la bande, à sa sortie de la lingotière un produit laissant subsister une couche lubrifiante sur ladite surface au moment où la bande est laminée à chaud et causant un dégagement gazeux contribuant à protéger ladite surface de l'oxydation.

Ladite couche lubrifiante peut être un matériau carboné.

Ledit produit laissant subsister une couche lubrifiante peut alors être du graphite.

Ledit produit laissant subsister une couche lubrifiante peut être une graisse contenant du carbonate de calcium.

Ledit produit laissant subsister une couche lubrifiante peut être de l'acétylène.

Le laminage à chaud peut être effectué avec un taux de réduction d'au moins 50%.

Ledit métal liquide peut être un alliage ferreux.

L'invention a également pour objet une installation de coulée continue directe d'une bande mince métallique, du type comportant une lingotière à parois mobiles refroidies où a lieu la solidification de ladite bande et une installation de laminage à chaud en ligne de ladite bande solidifiée, caractérisée en ce qu'elle comporte des moyens pour envoyer sur la surface de ladite bande à sa sortie de la lingotière un produit laissant subsister sur ladite surface une couche lubrifiante à l'entrée de l'installation de laminage à chaud.

Lesdites parois mobiles peuvent être les parois latérales de deux cylindres en rotation en sens contraires.

Lesdites parois mobiles peuvent être deux bandes en défilement.

L'installation peut comporter un caisson d'inertage de ladite bande entre la sortie de la lingotière et l'entrée de l'installation de laminage à chaud.

Comme on l'aura compris, l'invention consiste à envoyer sur la surface de la bande sortant des cylindres de coulée d'un produit (initialement à l'état solide, liquide ou gazeux) qui doit laisser subsister une couche lubrifiante sur la surface de la bande jusqu'à l'entrée de la bande dans la cage du laminoir à chaud. L'effet de lubrification lors de ce laminage permet de réaliser en une seule passe des taux de réduction égaux ou supérieurs à 50%.

Bien entendu, il est envisageable de faire suivre cette passe de laminage d'une ou de plusieurs autres (éventuellement séparées par des réchauffages ou refroidissements intermédiaires).

Dans ces conditions, il est envisageable de parvenir à des bandes bobinées d'une épaisseur de 1,5 à 1mm, voire moins, en partant de bandes coulées d'une épaisseur de 3 à 5mm en sortie des cylindres, donc conformes à la pratique la plus habituelle en la matière. Les produits laminés à chaud ainsi obtenus peuvent même, dans certains cas, être substituables à des produits de même épaisseur dont l'obtention a nécessité un laminage à froid. En tout cas, la possibilité de réaliser un taux de réduction très élevé lors du laminage à chaud donne accès à de nouvelles possibilités métallurgiques tirant parti des bandes fortement corroyées ainsi obtenues.

L'obtention de ces taux de réduction très élevés dans des conditions de qualité de surface des bandes satisfaisantes n'est envisageable que si la surface de ladite bande est exempte ou pratiquement exempte de calamine au moment du laminage. De ce point de vue, l'invention est également particulièrement avantageuse. En effet, la couche de produit destinée à former le lubrifiant agit comme une couche protectrice contre l'oxydation atmosphérique. D'autre part, un craquage du produit, au moment de son application sur la bande et dans les moments qui suivent, a pour résultat la formation de gaz qui vont servir à inerter la surface de la bande en diminuant drastiquement la concentration en oxygène à son voisinage. Si on utilise une enceinte d'inertage, ces gaz vont y demeurer et participer eux-mêmes à l'inertage, ce qui permet de diminuer les quantités de gaz neutre ou réducteur introduites. Dans les cas les plus favorables, il est même possible de se passer de l'enceinte d'inertage, le dégagement gazeux issu du produit chauffé et décomposé par la chaleur de la surface de la bande s'avérant suffisant pour assurer la faible concentration en oxygène désirée au voisinage de la surface de la bande.

Dans la pratique, la bande sortant des cylindres met quelques secondes à arriver jusqu'au laminoir à chaud en ligne, et se trouve à une température de l'ordre de 950 à 1050°C. Le produit doit donc présenter des caractéristiques telles qu'il puisse subsister sous une forme efficace, par exemple sous forme d'une matière carbonée, sur la surface de la bande entrant dans le laminoir, et qu'il puisse produire des gaz protecteurs, du fait de son craquage, au moins dans les instants qui suivent la sortie de la bande des cylindres. C'est dans ces instants que la bande est la plus chaude, et donc que le risque de formation de la calamine est le plus élevé. En l'absence d'enceinte d'inertage, il est préférable que ce craquage puisse se poursuivre jusqu'au laminoir à chaud. La nature du produit et la quantité déposée sur chaque face de la bande doivent être choisies en conséquence.

Parmi les produits pouvant être utilisés dans le cadre de l'invention, on peut citer la poudre de graphite, ou une graisse contenant jusqu'à 50% de carbonate de calcium. Du fait de sa viscosité relativement élevée, ce dernier type de produit peut être particulièrement adapté à l'enduction de la bande, notamment dans les portions de son parcours où elle est verticale, ou sur son côté extrados, lors de sa progression dans la machine.

De manière générale, un produit laissant subsister après son craquage un résidu carboné sur la surface de la bande prête à être laminée peut être utilisé avantageusement.

Une manière d'obtenir ce résidu carboné peut, par exemple, consister à insuffler de l'acétylène sur la surface de la bande. Sa combustion selon la réaction

2C₂H₂ + 2O₂ → 2C + H₂O + CO + CO₂ + H₂

produit du graphite qui constitue alors la couche lubrifiante que l'invention vise à obtenir. Cette réaction produit également de l'hydrogène qui rend l'atmosphère réductrice.

L'invention a été décrite dans le cadre de son application à la coulée de bandes minces métalliques entre deux cylindres. Mais il est aussi envisageable de l'expliquer avec profit à d'autres types d'installations de coulées de bandes minces, par exemple à des coulées de bandes minces d'épaisseur relativement élevée, de l'ordre de 5 à 10mm, entre deux bandes refroidies en défilement.

## Revendications

1. Procédé de coulée continue directe d'une bande métallique selon lequel on coule ladite bande par solidification de métal liquide dans une lingotière à parois mobiles refroidies et on effectue un laminage à chaud en ligne de ladite bande, **caractérisé en ce qu'**on envoie sur la surface de la bande, à sa sortie de la lingotière un produit laissant subsister une couche lubrifiante sur ladite surface au moment où la bande est laminée à chaud et causant un dégagement gazeux contribuant à protéger ladite surface de l'oxydation.

2. Procédé selon la revendication 1, **caractérisé en ce que** ladite couche lubrifiante est un matériau carboné.

3. Procédé selon la revendication 2, **caractérisé en ce que** ledit produit laissant subsister une couche lubrifiante est du graphite.

4. Procédé selon la revendication 2, **caractérisé en ce que** ledit produit laissant subsister une couche lubrifiante est une graisse contenant du carbonate de calcium.

5. Procédé selon la revendication 2, **caractérisé en ce que** ledit produit laissant subsister une couche lubrifiante est de l'acétylène.

6. Procédé selon l'une des revendications 1 à 5, **caractérisé en ce que** le laminage à chaud est effectué avec un taux de réduction d'au moins 50%.

7. Procédé selon l'une des revendications 1 à 6, **caractérisé en ce que** ledit métal liquide est un alliage ferreux.

8. Installation de coulée continue directe d'une bande mince métallique, du type comportant une lingotière à parois mobiles refroidies où a lieu la solidification de ladite bande et une installation de laminage à chaud en ligne de ladite bande solidifiée, **caractérisée en ce qu'**elle comporte des moyens pour envoyer sur la surface de ladite bande à sa sortie de la lingotière un produit laissant subsister une couche lubrifiante sur ladite surface à l'entrée de l'installation de laminage à chaud.

9. Installation selon la revendication 8, **caractérisée en ce que** lesdites parois mobiles sont les parois latérales de deux cylindres en rotation en sens contraires.

10. Installation selon la revendication 8, **caractérisée en ce que** lesdites parois mobiles sont deux bandes en défilement.

11. Installation selon l'une des revendications 8 à 10, **caractérisée en ce qu'**elle comporte un caisson d'inertage de ladite bande entre la sortie de la lingotière et l'entrée de l'installation de laminage à chaud.

## Claims

1. Method for the direct continuous casting of a metal strip according to which said strip is cast by solidifying liquid metal in an ingot mould, with cooled moveable walls, and said strip is hot-rolled in-line, **characterised in that** there is dispensed on the surface of the strip, as it leaves the ingot mould, a product allowing a lubricating layer to exist on said surface at the moment when the strip is hot-rolled and causing gases to be emitted contributing to the protection of said surface from oxidation.

2. Method according to claim 1, **characterised in that** said lubricating layer is a carbonaceous material.

3. Method according to claim 2, **characterised in that** said product allowing a lubricating layer to exist is graphite.

4. Method according to claim 2, **characterised in that** said product allowing a lubricating layer to exist is a grease containing calcium carbonate.

5. Method according to claim 2, **characterised in that** said product allowing a lubricating layer to exist is acetylene.

6. Method according to one of claims 1 to 5, **characterised in that** hot-rolling is carried out with a reduction rate of at least 50%.

7. Method according to one of claims 1 to 6, **characterised in that** said liquid metal is a ferrous alloy.

8. Installation for the direct continuous casting of a thin metal strip, of the type comprising an ingot mould with cooled moveable walls where solidification of said strip occurs and an installation for hot-rolling said solidified strip in-line, **characterised in that** it includes means for conveying onto the surface of said strip on leaving the ingot mould a product allowing a lubricating layer to exist on said surface on entering the hot-rolling installation.

9. Installation according to claim 8 **characterised in that** said moveable walls are the side walls of two cylinders rotating in opposite directions.

10. Installation according to claim 8, **characterised in that** said moveable walls are two strips in progression.

11. Installation according to one of claims 8 to 10, **characterised in that** it includes a chamber for inerting said strip between the outlet from the ingot mould and the inlet to the hot-rolling installation.

## Patentansprüche

1. Verfahren zum Direkt-Stranggießen eines Metallbandes durch Vergießen des Bandes unter- Verfestigen des flüssigen Metalls in einer Blockform mit gekühlten mobilen Wänden und direktes Warmwalzen des Bandes, **dadurch gekennzeichnet, daß** man auf die Oberfläche des Bandes bei seinem Austreten aus der Blockform ein Produkt aufbringt, das zum Zeitpunkt des Warmwalzens des Bandes eine schmierende Schicht auf seiner Oberfläche bildet und eine Gasentwicklung verursacht, welche die Oberfläche gegen Oxidation schützt.

2. Verfahren nach Anspruch 1, **dadurch gekennzeichnet, daß** die schmierende Schicht ein kohlenstoffhaltiges Material umfaßt.

3. Verfahren nach Anspruch 2, **dadurch gekennzeichnet, daß** das die schmierende Schicht bildende Produkt Graphit ist.

4. Verfahren nach Anspruch 2, **dadurch gekennzeichnet, daß** das eine schmierende Schicht bildende Produkt ein Calciumcarbonat enthaltendes Fett ist.

5. Verfahren nach Anspruch 2, **dadurch gekennzeichnet, daß** das eine schmierende Schicht bildende Produkt Acetylen ist.

6. Verfahren nach einem der Ansprüche 1 bis 5, **dadurch gekennzeichnet, daß** das Warmwalzen mit einem Walzgrad von mindestens 50 % durchgeführt wird.

7. Verfahren nach einem der Ansprüche 1 bis 6, **dadurch gekennzeichnet, daß** das flüssige Metall eine Eisenlegierung ist.

8. Vorrichtung für den Direkt-Strangguß eines dünnen Metallbandes des Typs mit einer Blockform mit gekühlten mobilen Wänden, in der die Verfestigung des Bandes erfolgt, und einer Einrichtung zum direkten Warmwalzen des verfestigten Bandes, **dadurch gekennzeichnet, daß** sie Einrichtungen umfaßt zum Aufbringen eines Produkts auf die Oberfläche des Bandes bei seinem Austreten aus der Blockform, das auf der Oberfläche bei ihrem Eintreten in die Warmwalzeinrichtung eine schmierende Schicht bildet.

9. Einrichtung nach Anspruch 8, **dadurch gekennzeichnet, daß** die mobilen Wände die Seitenwände von zwei Zylindern sind, die im Gegensinn rotieren.

10. Einrichtung nach Anspruch 8, **dadurch gekennzeichnet, daß** die mobilen Wände zwei Förderbänder sind.

11. Einrichtung nach einem der Ansprüche 8 bis 10, **dadurch gekennzeichnet, daß** sie zwischen dem Austritt aus der Blockform und dem Eintritt in die Warmwalzeinrichtung einen Inertisierungskasten aufweist.
